# EUROPEAN PATENT SPECIFICATION

(11) **EP 2 149 271 B1**
(45) Date of publication and mention of the grant of the patent: **08.06.2011**
(21) Application number: 08742950.2
(22) Date of filing: 16.04.2008
(51) Int. Cl.: H04W 4/14

(54) **INSERTION OF ADVERTISEMENT CONTENT INTO A TEXT MESSAGE**
EINFÜGUNG VON WERBEINHALT IN EINE TEXTNACHRICHT
INSERTION DE CONTENU PUBLICITAIRE DANS UN MESSAGE TEXTE

(30) Priority: 16.04.2007 US 907746 P
(43) Date of publication of application: 03.02.2010
(73) Proprietor: Roamware, Inc., San Jose, CA 95128 (US)
(72) Inventor: JIANG, John, Danville, CA 94506 (US); HAN, Zongwei, San Jose, CA 95128 (US)
(74) Representative: Wallis, Helen Frances Mary
(86) International application number: PCT/US2008/004902
(87) International publication number: WO 2008/130565

(56) References cited:
- EP-A- 1 542 482
- WO-A-02/07454
- WO-A-03/015430
- US-A1- 2005 176 450

## Description

### BACKGROUND OF THE INVENTION

The present invention relates to the field of Short Message Service (SMS), and more particularly, to a method and system for inserting advertisement content into a text message.

Messaging, such as Short Message Service (SMS) is a phenomenon that has become increasingly popular in the field of mobile communications. Around the world, multitudes of users send messages every day. Though the price to send each SMS is not very high, as a user sends more and more messages, he may become apprehensive about spending too much money. So cost-conscious users may well welcome a service which can reduce or even eliminate the price to send SMS-type messages.

Explosive growth in over the past several years and increasing competition has forced service operators to lower the cost of mobile services. So mobile operators (operators of public mobile wireless networks) are looking for alternate sources of revenue. Advertising comes to mind, since it has been so successful in print, broadcast and internet media. Operators hope to also capitalize upon it in the mobile world. One approach would be to insert advertising content into a text message sent to mobile phone subscribers.

According to the GSM Specification 340, there is a maximum length of 140 Octets for text message content. The actual maximum size of characters of a text message depends on the Data Coding Scheme (DCS) employed. In case of a 7-bit scheme, the length of a text message is up to 160 characters. In case of an 8-bit scheme, the length of a text message is up to 140 characters. In case of UCS2 encoding, the length of a text message is up to 70 characters. But very often, a user does not send a text message with maximum number of characters. So very often, there is room for inserting at least a textual advertisement to the text message.

One approach for inserting advertisement content into a text message is based on Short Message Service Center (SMSC) modification. In this approach, when a text message goes through a SMSC, the SMSC inserts advertisement content into the sender's text message if the sender has subscribed to an advertisement based service. But the problem with this approach is that an existing SMSC needs be modified, which introduces huge costs when an operator has a large number of SMSCs. For example, SMS is popular in China, but China Mobile operates a large number of SMSCs. Another problem faced in this approach is that all text messages will need to be checked against advertisement based service-subscription, whether the senders are advertisement subscribers or not. This will lead to increased CPU usage and introduce an otherwise unnecessary load on each SMSC. Further, modifying an existing SMSC could affect the promptness and reliability of existing SMS service even when a small number of users subscribe to the advertisement based SMS service.

Yet another approach for inserting advertisement content into a text message is for the subscriber to add a prefix to a destination number or send a SMS a special number with top line of the message being the destination number. But then, the subscriber would not be able to initiate messages using the phonebook feature of his handset, in which the destination numbers are stored without prefix. Further, a Short Message Entity (SME) address will have to be defined for each SMSC. Also, the SMSC may still be changed so as not to charge the prepaid subscribers for advertisement based sponsored text message.

International Patent Application WO 03/015430 describes a method of including advertising content in a message in which the sender selects an advertisement to be included with the message and sends the message together with the advertisement (or an indication thereof) to the recipient. In an embodiment, the sender sends a tag designating the advertisement to a service provider or other entity which appends the advertisement to the message and splits the message as appropriate en route to the recipient.

International Patent Application WO 02/07454 describes call-unrelated triggering in an intelligent network. A short message or an Unstructured Supplementary Service Data (USSD) chain is received and processed by a switching means on the basis of stored subscriber data. There is also provided a control means for controlling the processing operation of the switching means which reports to the control means upon detection of an event detection point previously armed by the control means. In an embodiment, the control means may change the destination of the short message, i.e. both the SMSC address and called party where the short message was originally sent to.

Accordingly, there is a need in the art for a system or method, that can insert advertisement content into text messages without modifying the existing network infrastructure. Additionally, there is a need for system, which can provide subscribers of the advertisement based service a cost effective solution for sending text messages.

### BRIEF DESCRIPTION OF THE DRAWINGS

FIG. 1 illustrates an exemplary environment in which various embodiments of the present invention can be practiced.
FIG. 2 is a block diagram illustrating a system for inserting advertisement content into a text message, in accordance with an embodiment of the present invention.
FIG. 3 is a flowchart illustrating a method for inserting advertisement content into a text message, in accordance with an embodiment of the present invention.
FIG. 4 is a flowchart illustrating a method for inserting advertisement content, into a text message, in accordance with another embodiment of the present invention.
FIG. 5 illustrates a system Architecture of the system for inserting advertisement content into a text message, in accordance with another embodiment of the present invention.
FIG. 6 illustrates a process flow of relaying a text message through the system for inserting advertisement content into a text message, in accordance with an embodiment of the present invention.
FIG. 7 illustrates an exemplary flow of sending the text message through the system for inserting advertisement content into a text message, in accordance with an embodiment of the present invention.
FIG. 8 illustrates an exemplary flow of receiving a reply to text message through the system for inserting advertisement content into a text message, in accordance with an embodiment of the present invention.
FIG. 9 illustrates an exemplary flow of failed delivery of the text message sent through the system for inserting advertisement content into a text message, in accordance with an embodiment of the present invention.
FIG. 10 illustrates a system Architecture of the system for inserting advertisement content into a text message for multiple operators, in accordance with an embodiment of the present invention.
FIG. 11 illustrates a process flow of receiving the text message within CAMEL 3 framework with a new MO-SMS-CSI for the subscriber, in accordance with an embodiment of the present invention.
FIG. 12 illustrates a process flow of receiving the text message within CAMEL 3 framework with an existing MO-SMS-CSI for the subscriber, in accordance with another embodiment of the present invention.
FIG. 13 illustrates a process flow of sending delivery status information to the subscriber, in accordance with an embodiment of the present invention.
FIG. 14 illustrates a process flow of sending delivery status information to the subscriber, in accordance with another embodiment of the present invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### SUMMARY OF THE INVENTION

One object of the present invention is to provide a method and system for inserting advertising content into a text message.

Another object of the present invention is to provide a method and system for inserting advertising content into text messages without modifying the existing network infrastructure.

Yet another object of the present invention is to provide a method and system for providing people with a cost effective solution for sending text messages.

The above and other objects of the present invention are achieved by providing a method and system for inserting advertising content into a text message. The text message is sent from a first communication device by a subscriber to a recipient via an SMSC. In accordance with an embodiment of the present invention, the method for inserting advertising content into a text message includes changing original SMSC address of the text message. The method further includes receiving the text message. Further, the method includes inserting at least one advertisement into the text message, where the at least one advertisement is selected from one or more advertisements. The method further includes directing the text message with the at least one advertisement to the SMSC. Finally, the method includes providing a credit to the subscriber for the text message.

In accordance with another embodiment of the present invention, the system for inserting advertising content into a text message includes a SMS-relay platform for receiving the text message and directing the text message to the SMSC. The text message is received at the SMS-relay platform after having original SMSC address changed. Further, the system includes an advertisement module for inserting at least one advertisement into the text message received at the SMS-relay platform, where the at least one advertisement is selected from one or more advertisements. Finally, the system includes a credit module for providing a credit to the subscriber for the text message.

### DETAILED DESCRIPTION OF THE DRAWINGS

Before describing in detail the particular method and system for inserting advertisement content into a text message in accordance with the present invention, it should be observed that the present invention resides primarily in combinations of method steps and system components related to inserting advertisement content into a text message.

Accordingly, the system components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

In this document, relational terms such as 'first' and 'second', and the like may be used solely to distinguish one entity or action from another entity or action without necessarily requiring or implying any actual such relationship or order between such entities or actions. The terms 'comprises', 'comprising', or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by 'comprises ... a' does not, without more constraints, preclude the existence of additional identical elements in the process, method, article, or apparatus that comprises the element. When this specification refers to "SS7" what is meant is a signaling protocol of any description (be it SS7, Sigtran, or any other), or any signaling network.

According to the GSM Specification 340, there is a maximum length of 140 Octets for text message content. The actual maximum size of characters of a text message depends on the Data Coding Scheme (DCS) employed. In case of a 7-bit scheme, the length of a text message is up to 160 characters. In case of an 8-bit scheme, the length of a text message is up to 140 characters. In case of UCS2 encoding, the length of a text message is up to 70 characters. But very often, a user does not send a text message with maximum length of the text message content. So there is room in each such text message for adding at least a textual advertisement.

The present invention provides a method and system for inserting advertisement content into a text message. In an embodiment of the present invention, the system is put in a signaling network (such as an SS7, Sigtran, or other signaling protocol-based network) without changing any existing SMSCs and without changing subscription and registration profiles at existing network infrastructure. For example, a preferred embodiment requires no material modification to existing network elements such as HLR, VLR, VMSC, SGSN and the like.

A text message is sent from a first communication device by a subscriber to a recipient via an SMSC. In accordance with an embodiment of the present invention, the method for inserting advertisement content into a text message includes changing original SMSC address of the text message. The method further includes receiving the text message with the changed SMSC address. Further, the method includes inserting at least one advertisement into the text message, where the at least one advertisement is selected from one or more advertisements. The method further includes directing the text message with the at least one advertisement to the SMSC. Finally, the method includes providing a credit to the subscriber for the text message.

It is noted that some embodiments of the present invention involve an advertising insertion element inspecting the contents of a user's message, and matching that to advertising content for insertion into the message sent to the destination user. Normally, that element would not be under the control of the user, but under the control of the mobile operator or advertising service provider. In some countries, it may be considered an invasion of privacy for such a third party to inspect the contents of a user's private communications without his permission. Registered common carriers, such as mobile operators, for the purposes of maintaining their registration and common carrier immunity, may be similarly prohibited from inspecting the contents of messages absent a user's permission. For the purposes of this specification, it is assumed that all practitioners of the present invention would be sure to comply with law and regulation while using the invention. For example, in preferred embodiments, the mobile operator or advertising service operating that ad-insertion element, would obtain the sender's permission before permitting the element, as a default matter, to inspect the contents of his outgoing messages.

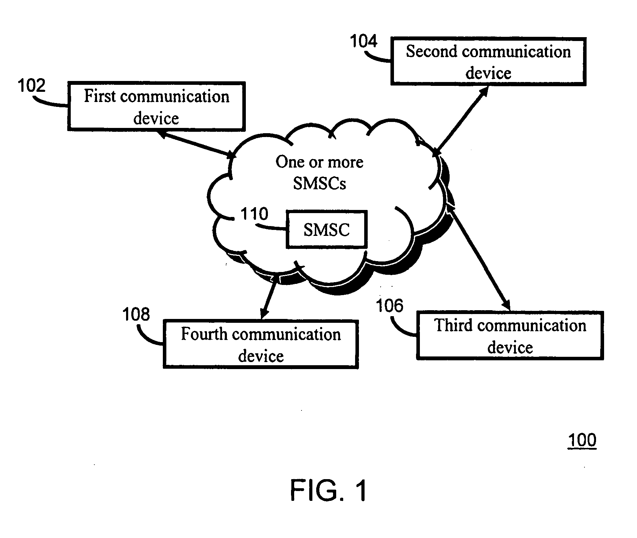

FIG. 1 illustrates an exemplary environment in which various embodiments of the present invention can be practiced. The environment includes a first communication device 102, a second communication device 104, a third communication device 106 and a fourth communication device 108. Examples of communication devices 102, 104, 106 and 108 include mobile phones, landline phones, computers, laptops, smart phones, Personal Digital Assistants (PDAs), WiFi phones, tablet PCs, watches, fax machines, cameras, and the like. The environment includes one or more SMSCs for delivering text messages. In an embodiment of the present invention, a user uses the first communication device 102 to send a text message to the second communication device 104 via a SMSC 110.

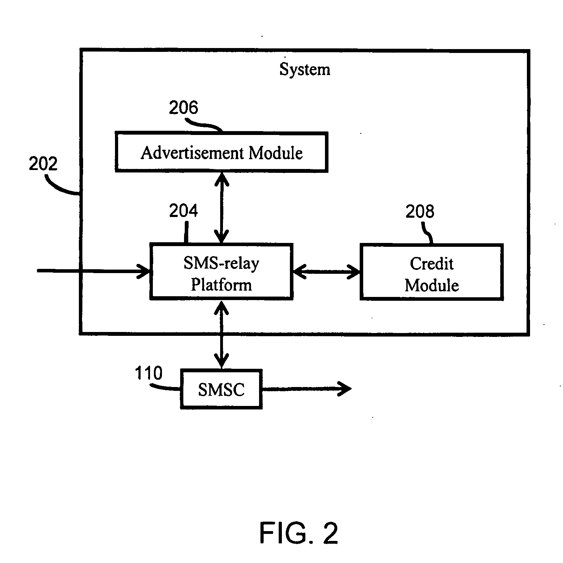

FIG. 2 is a block diagram illustrating a system 202 for inserting advertisement content into a text message, in accordance with an embodiment of the present invention. The text message is sent from a first communication device 102 by a subscriber to a recipient via the SMSC 110. The SMSC 110 is an original SMSC of the text message. The original SMSC address of the text message is changed so that the text message is received at the system 202. The system 202 includes a SMS-relay platform 204, and an advertisement module 206, and a credit module 208.

In accordance with an embodiment of the present invention, the original SMSC address of the text message is changed by mapping a Global Title (GT) to the original SMSC address of the text message at the first communication device 102. In this approach, a Global Title (GT) works as a fake SMSC address for ad-inserted-SMS subscribers. Hence, the subscriber has an address of the system 202 corresponding to the SMSC 110 as the new SMSC address on the first communication device 102. In this way, when the subscriber sends the text message, the text message is handled by the system 202 first.

An SMS-relay platform 204 is capable of receiving the text message from the first communication device 102 and directing the text message to the SMSC 110. In an embodiment of the present invention, the SMS-relay platform 204 is connected to the SMSC 110 via a SS7 connection. Examples of the SS7 connection include, but are not limited to, TDM and SIGTRAN. The SMS-relay platform 204 relays the MO-SMS from a mobile station to an original SMSC. The platform handles MAP message "MAP-MO-FORWARD-SHORT-MESSAGE" to get the SMS.

The SMS-relay platform 204 interfaces with an advertisement module 206 to insert advertisement content into the text message content. When the text message is going through the SMS Relay system 202, the content of the text message is analyzed automatically by the advertisement module 206. In an embodiment of the present invention, an advertisement is selected from a database having a plurality of advertisements based on pre-specified criteria. The pre-specified criteria includes the content of the text message (keywords, language, size), the profile of a subscriber, the recipient profile, the context, and the free space (the unused part to the maximum length of the text message) of the text message. The selected advertisement is then inserted to the content of the text message.

The SMS-relay platform 204 then interfaces with a credit module 208 to apply a credit to the first subscriber. The SMS-Relay platform 204 then relays the text message with inserted content to the SMSC 110 corresponding to the GT of the Ad-Insertion service address used by the subscriber. The credit module 208 is capable of interfacing an operator's prepaid system for prepaid subscribers and an operator's billing system for postpaid subscribers. The credit module 208 credits a subscriber for an ad-inserted text message as long as the text message reaches the SMSC 110. In an embodiment of the present invention, the credit is confirmed by the credit module 208 only when a recipient receives the ad-inserted text message. The SMS-relay platform 204 interfaces the credit module 208 to apply a credit to the sender only after the SMSC 110 acks for the successful receipt of the ad-inserted text message from the SMS-relay platform 204. This is done to avoid abuse of the Ad-insertion system 202 and to prevent a subscriber from sending a text message to a fake destination to gain credit. In another embodiment of the present invention, the ad-inserted text message does not get delivered to the second communication device 104, and further, the credit is retracted by the credit module 208 from the first subscriber. On receiving negative ack (For example, not allowed to send the text message or unknown destination number) on the reception of the message by the SMSC 110, the SMS-relay platform 204 interfaces the credit module 208 to retract the credit. In an embodiment of the present invention, the SMS-relay platform 204 has a database of blacklisted subscribers who may be abusers of the Ad-insertion system 202, whose are children with parents who may have blocked access to advertisements, or who have may themselves "opted out" of any advertising or third party publishing to their handsets. The database of the blacklisted subscribers can be dynamically built based on credit history, default rate, opt-in / opt-out information, or default pattern of the subscribers, or any other subscriber-selected, operator-selected, or automatically selected criteria.

In accordance with another embodiment of the present invention, the original SMSC address of the text message is changed via a CAMEL-based approach. The CAMEL approach can be applied for a HPMN that supports CAMEL 3 or above. In the CAMEL approach, the subscriber does not need to change SMSC address on the first communication device 102. However the subscriber is provisioned at HLR with a CAMEL 3 MO-SMS CAMEL Subscription Information (MO-SMS-CSI) which is downloaded to VLR at the registration of the VLR by the subscriber. The Service Control Point (SCP) of the trigger is the SMS-relay platform 204.

Each time the subscriber sends a text message, the control of the text message is sent to the SCP by a Service Switch Point (SSP). For example, MSC, SGSN and the like. The SCP then redirects the SSP to send the text message to pass through the SCP itself by changing the SMSC address to be a global title of the system 202 to correspond to the original SMSC address. The system 202 then inserts advertisement content into the text message first before directing the text message to the SMSC 110.

In another embodiment, the subscriber already has a MO-SMS CSI in the HLR. Further, the service key of the profile in the HLR is changed to another service key corresponding to the system 202. Each time the subscriber sends a text message, the control of the text message is passed by SSP to the original SCP via relay through the SMS-relay platform 204.

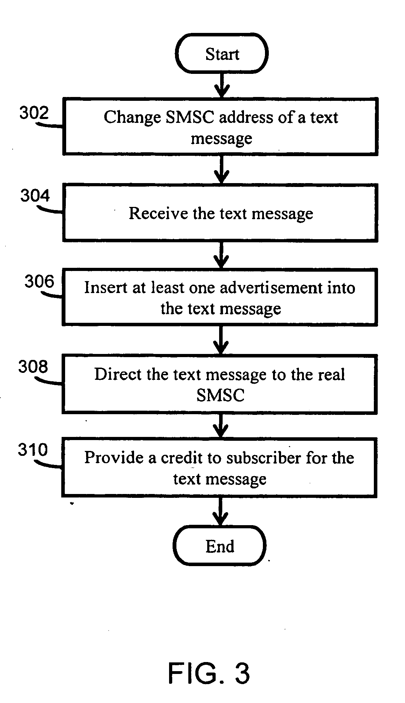

FIG. 3 is a flowchart illustrating a method for inserting advertisement content into a text message, in accordance with an embodiment of the present invention. The text message is sent from the first communication device 102 by the subscriber to the recipient via the SMSC 110.

At step 302, the SMSC address of the text message is changed. In accordance with an embodiment of the present invention, the original SMSC address of the text message is changed at the first communication device. The SMSC address is changed by mapping a Global Title (GT) to the original SMSC address of the text message at the first communication device 102. The GT is the address for sending the text message to the system 202. In the one embodiment, the subscriber changes the SMSC address information on the first communication device 102 manually.

In another embodiment, the operator or the mobile advertising service provider changes the SMSC address at the first communication device 102 remotely, for example through an Over The Air (OTA) process. When a new user subscribes for the Ad-insertion SMS service, the OTA system sends a special message to the first communication device 102 to change the original SMSC address to the GT of the system 202.

In yet another embodiment of the present invention, the original SMSC address of the text message is changed via the CAMEL approach. The subscriber sends the text message, and then the control of the text message is sent to a SCP by the Service Switch Point (SSP). The SCP then redirects the SSP to send the text message to pass through the system 202 by changing the SMSC address to global title of the system 202 to correspond to the original SMSC address.

At step 304, the system 202 receives the text message at the SMS-relay platform 204, where the text message is received with the changed SMSC address. The SMS-relay platform 204 then interfaces with the advertisement module 206 to insert at least one advertisement at step 306. The at least one advertisement is selected from one or more advertisements. In an embodiment of the present invention, the SMS-relay platform converts Data Coding Scheme (DCS) of the text message and the at least one advertisement to a same DCS. In another embodiment of the present invention, the text message is substantially long and there are not enough Octets in the text message to insert the at least one advertisement. Then, the SMS-relay platform 204 breaks the text message into at least two text messages. The SMS-relay platform 204 then interfaces with the advertisement 206 and inserts advertisement content into at least one of the at least two text messages.

At step 308, the SMS-relay platform 204 directs the text message to the SMSC 110. In an embodiment of the present invention, the text message is directed to the SMSC 110 by mapping Global Title (GT) of the text message with the original SMSC address. At step 310, the SMS-relay platform interfaces with the credit module 208 and provides a credit to the subscriber for the text message. In an embodiment of the present invention, the credit includes a refund of charges of the text message, a free text message, reward points to the subscriber, adding cash reward into an account created for the subscriber, refund of a part of the text message, and a free talk time to the subscriber. But note that the credit can be granted to the subscriber as any form of benefit, like frequent-flyer points, loyalty points or even as a cash reward. The credits can be accumulated arithmetically such that the benefit paid to the subscriber is directly proportional to the number of credits on a one-to-one basis, they can correspond to different tiered membership levels, or they can progress geometrically or by any other mathematical function chosen by the operator or service provider establishing the Credit scheme.

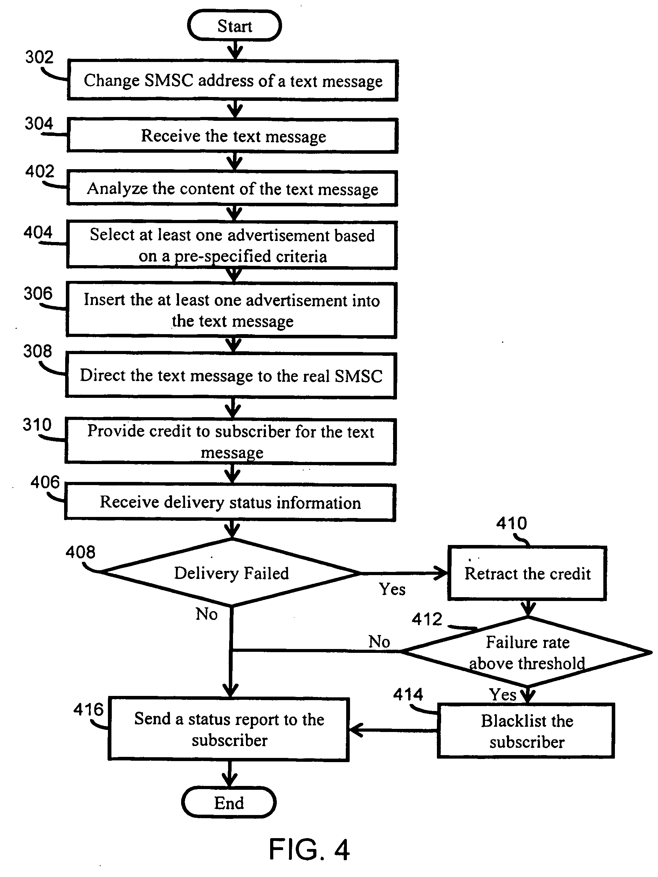

FIG. 4 is a flowchart illustrating a method for inserting advertisement content into a text message, in accordance with another embodiment of the present invention. The text message is sent from the first communication device 102 by the subscriber to the recipient via the SMSC 110. At step 302, the SMSC address of the text message is changed by mapping a GT of the system 202 to the original SMSC address.

In another embodiment of the present invention, the GT is selected from one or more GTs, where each GT of the one or more GTs is associated with a different VMSC/SGSN charge zone address. The SMS-relay platform 204 selects a GT from the pool of charge zone of the original VMSC/SGSN address to correspond to VMSC/SGSN address.

At step 304, the system 202 receives the text message at the SMS-relay platform 204, where the text message is received with the changed SMSC address. The SMS-relay platform 204 then interfaces with the advertisement module 206 for inserting advertisement content. At step 402, the advertisement module 206 can analyze the content or length of the text message, to the extent that privacy regulations permit it, and can analyze any other aspect of the message, including counting the characters, looking up the id of the calling party in any number of databases, including one that provides a user profile corresponding to that ID, or authenticates that id.

Further, at step 404, the advertisement module 206 selects at least one advertisement from one or more advertisements based on pre-specified criteria. The pre-specified criteria can be one or more criteria selected from a group comprising: content of the text message, profile of the subscriber, profile of the recipient, one or more keywords from the text message, size of the text message, language of the text message, context of the text message, context of a text message conversation between the subscriber and the recipient; bidding price of at least one keywords of the text message, and data coding schemes supported by the SMSC 110.

At step 306, the SMS-relay platform interfaces with the advertisement module 206 and inserts the at least one advertisement that is selected. At step 308, the SMS-relay platform 204 directs the text message to the SMSC 110. Further, at step 310, the SMS-relay platform interfaces with the credit module 208 and provides a credit to the subscriber for the text message. At step 406, the system 202 receives delivery status information of the text message from the SMSC 110. At step 408, the system 202 then checks if the delivery status information of the text message is positive and the text message has been delivered. In an embodiment of the present invention, the message does not get delivered. Examples of the cases when the message does not get delivered include, but are not limited to, unknown recipient number, and recipient number unreachable. Further, the system 202 retracts the credit provided to the subscriber for the text message at step 410. At step 412, the system 202 checks if message delivery failure rate of the subscriber reaches above a pre-specified threshold. In an embodiment of the present invention, the message delivery failure rate crosses the pre-specified threshold. Further, the system 202 blacklists the subscriber at step 414. Finally, at step 416, the system 202 sends a status report to the subscriber, where the status report includes the delivery status information. In an embodiment of the present invention, the system 202 inserts an advertisement into the status report. In another embodiment of the present invention, the status report includes credit balance of the subscriber. In yet another embodiment, the status report includes the failure delivery rate of the subscriber.

In an embodiment of the present invention, the system 202 provides credit to the subscriber only after the system 202 received confirmation of successful delivery of the text message. In case the message does not get delivered, the system 202 does not provide the subscriber with a credit.

In an embodiment of the present invention, the system 202 disables the insertion of the advertisement content into the text message temporarily. For example, when the subscriber wants to send the text message to his client, he may not want advertisement into the text message. In an embodiment of the present invention, the subscriber adds a pre-specified prefix to the recipient's number and on receiving the text message with the pre-specified prefix, the system 202 disables the insertion of the advertisement content into the text message.

In an embodiment of the present invention, the system 202 sends a request to the SMSC 110 for routing reply of the recipient through the system 202. Further, the system 202 receives the reply message of the recipient. In an embodiment, the system 202 insets an advertisement into the reply message before sending the reply message to the subscriber.

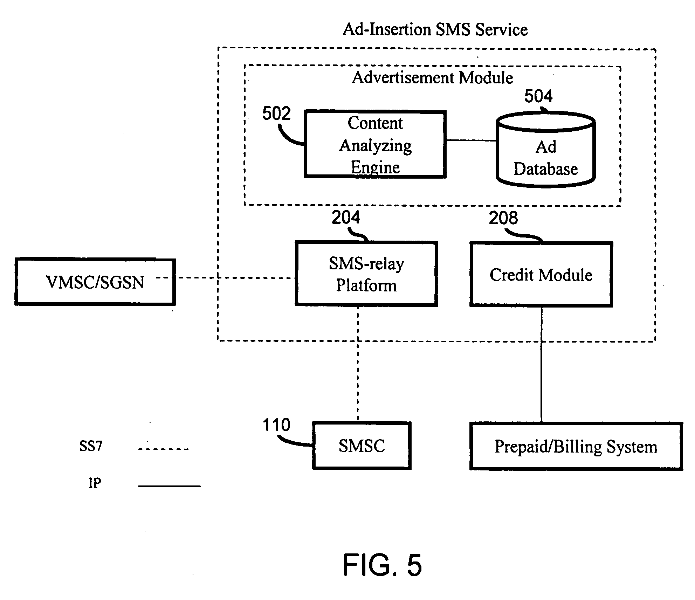

FIG. 5 illustrates a system Architecture of the system 202 for inserting advertisement content into a text message, in accordance with another embodiment of the present invention. The system 202 includes a SMS-relay platform 204, and an advertisement module 206, a credit module 208, a content analyzing engine 502, and advertisement database 504.

In an embodiment of the present invention, the subscriber of the ad-insertion SMS service should have an address of the system 202 in place of the SMSC 110 stored on the first communication device 102. In this approach, if the subscriber wants to use the Ad-insertion SMS service, the subscriber may need to change the original SMSC address to the GT of the SMS-relay platform 204 on the first communication device 102. As far as the subscriber is concerned, this GT is an Ad-insertion SMSC address. After that, when the subscriber sends a text message, the text message is sent to the SMS-relay platform 204. In an embodiment of the present invention, if the subscriber does not want to use this service at some time, the subscriber changes the GT on the first communication device 102 to the original SMSC address. In another embodiment of the present invention, if the subscriber does not know or remember the original SMSC address, the subscriber sends a pre-specified text message to a special SME address via the SMS-relay platform 204. The SME address points to the System 202. The pre-specified message then reaches the system 202 and the system 202 the GT to map to the original SMSC address which is then be delivered to the subscriber.

In another embodiment of the present invention, if an operator and the operator's subscriber mobile station base support change of configuration of handsets/SIM through an Over The Air (OTA) system, the subscriber does not need to change the original SMSC address manually on the first communication device 102. Instead, when the first subscriber applies for the Ad-insertion SMS service, the OTA system sends a special SMS to the first communication device 102 to change the original SMSC address to the Ad-insertion SMSC address. When the first subscriber wants to switch back to the SMSC 110, the OTA system then sends another special SMS to the first communication device 102 to change the SMSC address to the original SMSC address.

In accordance with another embodiment of the present invention, the original SMSC address of the text message is changed via a CAMEL approach. The CAMEL approach can be applied for a HPMN that supports CAMEL 3 or above. In the CAMEL approach, the subscriber does not need to change SMSC address on the first communication device 102. However the subscriber is provisioned at HLR with a CAMEL 3 MO-SMS CAMEL Subscription Information (MO-SMS-CSI) which is downloaded to VLR at the registration of the VLR by the subscriber. The Service Control Point (SCP) of the trigger is the SMS-relay platform 204. Each time the subscriber sends a text message, the control of the text message is sent to the SCP by a Service Switch Point (SSP). The SCP then redirects the SSP to send the text message to pass through the SCP itself by changing the SMSC address to be a global title of the system 202 to correspond to the original SMSC address. In another embodiment, the subscriber already has a MO-SMS CSI in the HLR. Further, the service key of the profile in the HLR is changed to another service key corresponding to the system 202. Each time the subscriber sends a text message, the control of the text message is passed by SSP to the original SCP via relay through the SMS-relay platform 204.

The SMS-relay platform 204 is configured to receive the text message from the first communication device 102 and relay the text message to the SMSC 110.

In an embodiment of the present invention, the SMS-relay platform 204 is configured to receive delivery status information of the text message from the SMSC 110. Further, the SMS-relay platform 204 sends the delivery status information to the first communication device 102 of the first subscriber. Since the system 202 needs to have delivery information on a delivery of an Ad-inserted text message in order to confirm/debit the credit of the subscriber, the SMS-relay platform 204 inserts a delivery receipt request before directing the text message to the SMSC 110 for delivery.

In an embodiment of the present invention, the SMS-relay platform 204 is configured to disable the insertion of the advertisement content into the text message temporarily. In an embodiment of the present invention, the first subscriber needs to disable the Ad-insertion SMS service temporarily. For example, while sending a text message to a client, sending a text message to a boss and the like. It is inconvenient for the first subscriber to change the SMSC address for a one-off text message, and change it back after sending the text message. In the present embodiment, a prefix to a recipient address can be used to disable this service temporarily. If the first subscriber wants to send a text message without advertisement content, he adds the prefix to the destination number. When the SMS-relay platform 204 receives the text message with the prefix on the destination number, the SMS-relay platform 204 does not interface with the advertisement module 206 for inserting content into the text message. The SMS-relay platform 204 then removes the prefix from the destination number and forwards the text message to the SMSC 110 directly.

In an embodiment of the present invention, the SMS-relay platform 204 is configured to send a reply path request to the SMSC 110. If the SMSC 110 supports the Reply Path Request, the recipient of the ad-inserted text message can use the original SMSC address for reply since the prefix may only be understood by the SMSC 110. In an embodiment of the present invention, the SMS-relay platform 204 captures the context of message exchanges between the first subscriber and the recipient of the text message. In another embodiment of the present invention, the SMS-Relay platform 204 sends another advertisement to the subscriber. In this case, no credit need be provided this time to the subscriber. In another embodiment of the present invention, advertisement content is inserted into the reply the subscriber receives from the recipient of the text message. For example, the first subscriber's message is "Have you had Lunch yet" and the recipient's reply is "Not yet, you have anywhere in mind". The Ad-insertion system 202 then inserts an advertisement to the reply "Not yet, you have anywhere in mind ** Pizza hut at 20% discount". Note that the Ad-insertion system, in a preferred embodiment, would maintain a status dictated by privacy law and regulation, as to whether the Ad-insertion system has the required permission (from the subscriber or other) to read or monitor the contents of those user-created messages for the purposes of matching them to advertising content.

The advertisement module 206 includes the content analysis module 502 and the database 504. The content analysis module 502 is capable of analyzing content of the text message. Examples of the basis on which the content can be analyzed include, but are not limited to, keywords, free space of the text message (i.e. how much space free for advertisement insertion), the first subscriber and the recipient profiles (For example age group, interests and the like), the context of the message (For example, to resolve multiple meanings of same keywords).

Further, the content analysis module 502 picks out an advertisement from the database 504. The advertisement database 504 stores a plurality of advertisements. All advertisement content that is inserted in a text message is less than 140 characters. In an embodiment of the present invention, in the database 504, the plurality of advertisement content is classified into categories to allow a right advertisement content to be inserted to the text message based on the content analysis by the content analysis module 502. In an embodiment, an advertisement content is purely brand-based or context dependent. In another embodiment of the present invention, each advertisement is attached to a set of keywords with bid price for each keyword to allow the advertisement with highest bid for a set of keywords to be chosen. In yet another embodiment of the present invention, the advertisement module 206 presents the sender and recipient profiles so that each advertisement can be tagged with a bid price for a keyword for each recipient profile.

For example, if the content of the text message is "Have you had lunch?", the content analysis module 310 seeks an advertisement from the database 504 that is under the category "Eating" that desires the keyword "Lunch". If more than one record is provided in the result, the content analysis module 502 picks one based on the bid price. The ad-inserted text message can be something like "Have you had Lunch? ** 20% discount at Pizza Hut; Call 1234". If the reply is "Not yet, what's your plan on Saturday?" and both the sender and the recipients are tennis players, the content analysis module 502 can add an advertisement to the reply message as "Not yet, what's your plan on Saturday? ** tennis training for $20, call 1234".

In an embodiment of the present invention, different languages of the advertisement content may be present in the database 504 to allow the addition of an advertisement with a language that corresponds to the language of the text message content for the same meaning of the advertisement. In another embodiment of the present invention, different sizes of a same advertisement are present in the database 504 to allow shorter form of an advertisement of the same meaning to be inserted into a text message that has lesser free space.

The credit module 208 provides a credit to the subscriber. The system SMS-relay platform 204 is configured to retract the credit when the text message does not get delivered to a second communication device. The SMS-relay platform 204 interfaces the credit module 208 to credit the sender before directing the ad-inserted text message to the SMSC 110. In an embodiment of the present invention, the SMSC 110 immediately fails to deliver the message because of access control or other reason (For example, unknown destination number and the like), then the SMSC 110 sends ack back to the SMS-relay platform 204. The SMS-relay platform 204 interfaces the credit module 208 and retracts the credit of the subscriber. In an embodiment, the SMS-relay platform 204 requests a delivery receipt from the SMSC 110 even when the subscriber has not requested so. If the final delivery is not successful, the SMS-relay platform 204 interfaces the credit module 208 and retracts the subscriber's credit.

In another embodiment of the present invention, the SMS-relay platform 204 credits the subscriber only after a positive acknowledgement from the SMSC 110 on the relayed ad-inserted text message.

In an embodiment of the present invention, the system 202 is configured to change Data Coding Scheme (DCS) of the text message and Data Coding Scheme (DCS) of an advertisement. In the database 504, each advertisement of the one or more advertisements can have a description in more than one language. In GT Mapping table, each SMSC will also have the list of supported DCSs. If the DCS of the text message is different with than advertisement content, there will be a DCS converting. For example, the DCS of the text message is 7-bit and the DCS of an advertisement is UCS2, and so the DCS of the text message is converted to UCS2 and then the advertisement is inserted into the text message. Another example is, the DCS of the text message is UCS2 and the DCS of an advertisement is 7-bit, and so the DCS of the advertisement is converted to UCS2 and then the advertisement is inserted into the text message. However, usually the same DCS advertisement as the DCS of the text message is inserted.

In an embodiment of the present invention, the system 202 is configured to break the text message into at least two text messages. In an embodiment of the present invention, advertisement content cannot be inserted for a long text message because of lack of needed free space. The SMS-relay platform 204 then breaks the long text message into two text messages, where an advertisement can be inserted into each of the two text messages. The first subscriber is then provided two credits for the two text messages. In another embodiment of the present invention, the text message is binary. When the DCS of a text message is 8-bit, the text message is recognized as a binary text message. The content analyzing engine 502 does not add an advertisement into the binary text message. The SMS-relay platform 204 then sends an advertisement as a separate text message. The credit module 208 then provides a credit for the text message to the first subscriber.

In an embodiment of the present invention, the subscriber is on a roaming network and the system 202 is configured to determine location of the subscriber. The location can be determined by SCCP CgPA of the text message. In an embodiment of the present invention, the system 202 may not add advertising content to the text message sent from the first communication device 102. In another embodiment of the present invention, the system 202 can provide local credit to the subscriber's account. So the subscriber has to pay for the difference in cost of a roaming text message and a local text message. In yet another embodiment of the present invention, the system 202 provides roaming credit to the subscriber's account. The roaming credit can be equal to retail roaming cost of the text message sent by the subscriber at VPMN. In yet another embodiment of the present invention, the system 202 can provide roaming credit to the subscriber's account. To cover the extra cost, the system 202 can send a separate advertisements to each one of the subscriber and the recipient.

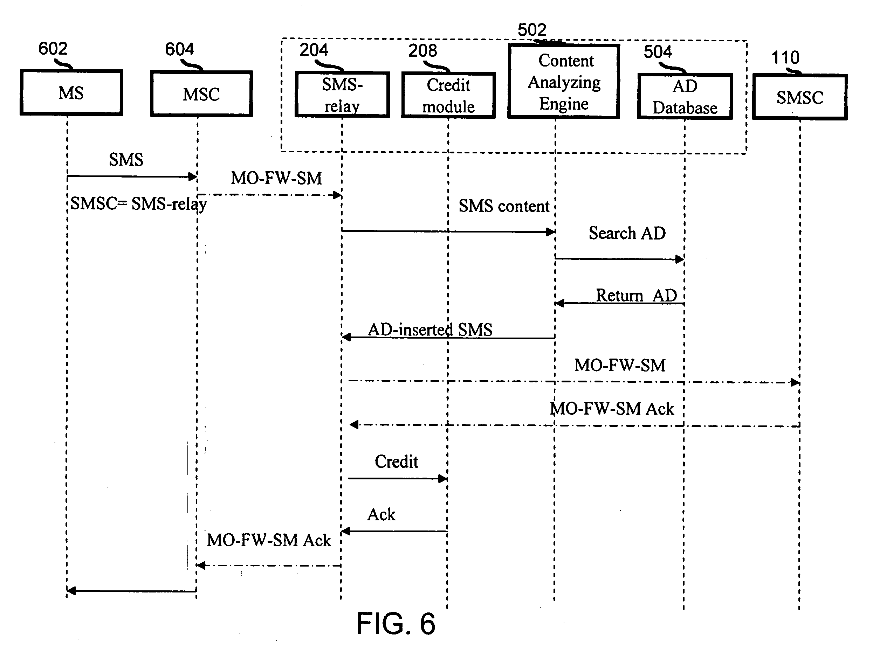

FIG. 6 illustrates a process flow of relaying a text message through the system for inserting advertisement content into a text message, in accordance with an embodiment of the present invention. The short message (SM) which has its SMSC address changed to the SMSC address of the SMS-relay platform 204 is sent from a mobile device 602. The MSC 604 forwards MO-FW-SM to the SMS-relay platform 204. The SMS-relay platform 204 interfaces with the advertisement module 206. The content analyzing engine 502 analyzes the content of the MO-FW-SM, and based on the analysis, searches advertisements in the database 504. The content analyzing engine 502 inserts an advertisement selected from the database 504 and sends the AD-inserted SMS to the SMS-relay platform 204. The SMS-relay platform 204 relays the AD-inserted MO-FW-SM to the SMSC 110. Further, the SMSC 110 acks the SMS-relay platform 204 for the MO-FW-SM and then the SMS-relay platform 204 provides a credit to the subscriber by interfacing with the credit module 208. Finally, the SMS-relay platform 204 acks the mobile device 602 for the MO-FW-SM.

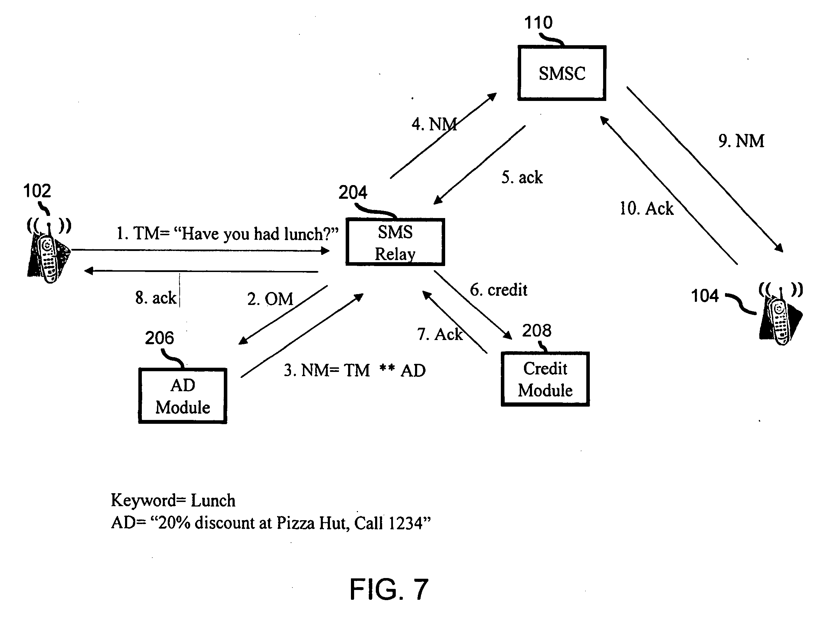

FIG. 7 illustrates an exemplary flow of sending the text message through the system for inserting advertisement content into a text message, in accordance with an embodiment of the present invention. The first communication device 102 sends the text message (TM) "Have you had lunch?" to the second communication device 104. The SMS-relay platform 204 interfaces with the advertisement module 206. The content analysis module 310 seeks an advertisement from the database 504 that is under the category "Eating" that desires the keyword "Lunch". The database returns "20% discount at Pizza Hut; Call 1234" and the advertisement module 206 inserts the returned advertisement. Then, the ad-inserted new message (NM) is "Have you had Lunch? ** 20% discount at Pizza Hut; Call 1234". Finally, SMS-relay platform 204 directs the NM to the SMSC 110.

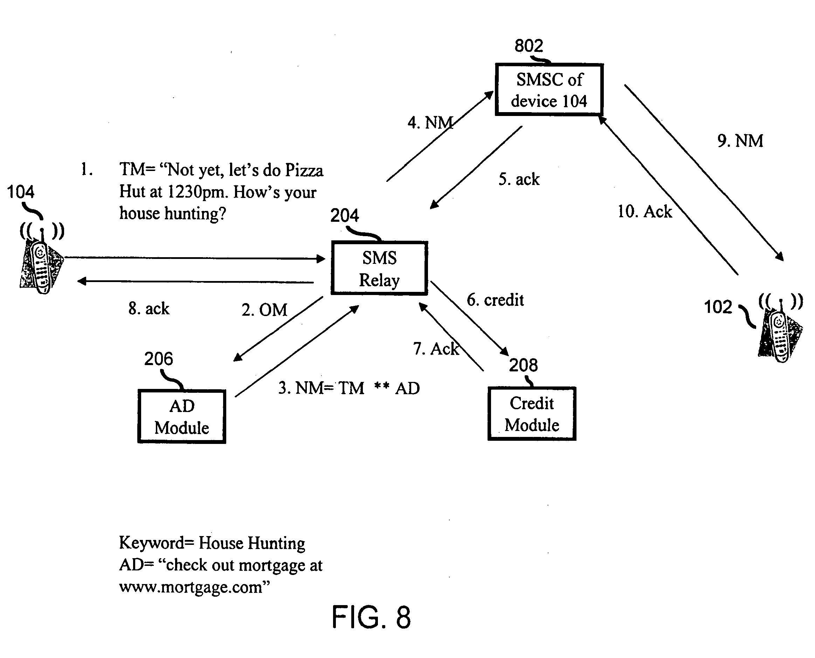

FIG. 8 illustrates an exemplary flow of receiving a reply to text message through the system for inserting advertisement content into a text message, in accordance with an embodiment of the present invention. The SMS-relay platform 204 captures the context of message exchanges between the first subscriber and the recipient of the text message. The subscriber's message is "Have you had Lunch yet" and the recipient's reply is "Not yet, let's do Pizza Hut at 1230pm. How's your house hunting?". The reply message is sent from the second communication device 104 to the first communication device 102. The SMS-Relay platform 204 the inserts another advertisement into the reply the subscriber receives from the recipient of the text message. Then, the ad-inserted new message (NM) is "Not yet, let's do Pizza Hut at 1230pm. How's your house hunting? ** check out mortgage at www.mortgage.com". Finally, the NM is sent to the first communication device 102 via SMSC 802 of the second communication device 104.

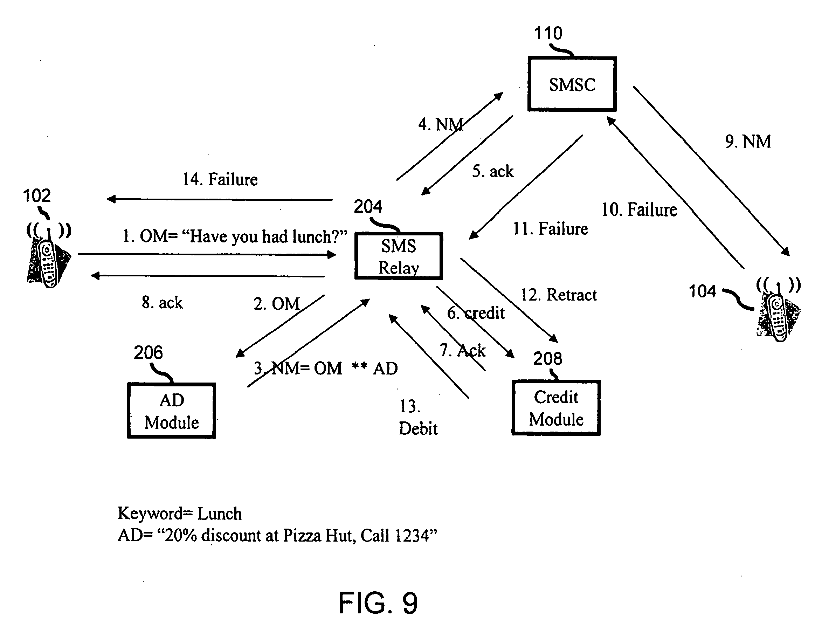

FIG. 9 illustrates an exemplary flow of failed delivery of the text message sent through the system for inserting advertisement content into a text message, in accordance with an embodiment of the present invention. The first communication device 102 sends the text message (TM) "Have you had lunch?" to the second communication device 104. The SMS-relay platform 204 interfaces with the advertisement module 206. Then, the ad-inserted new message (NM) is "Have you had Lunch? ** 20% discount at Pizza Hut; Call 1234". Further, SMS-relay platform 204 directs the NM to the SMSC 110 and a credit is applied to the subscriber. The NM fails to get delivered to the second communication device 104. The SMSC 110 acks the SMS-relay platform about the failure delivery of the NM. Finally, the SMSC 110 interfaces with the credit module 208 and retracts the credit provided to the subscriber.

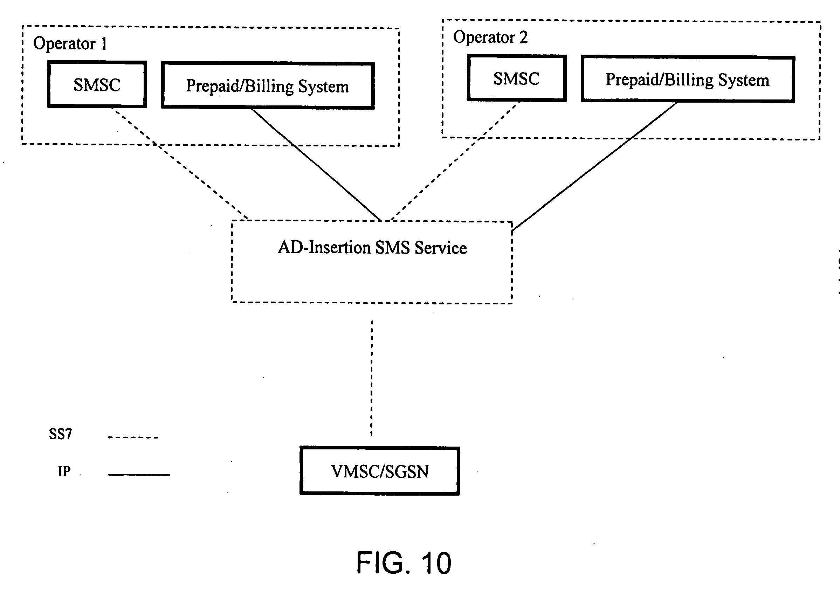

FIG. 10 illustrates a system Architecture of the system for inserting advertisement content into a text message for multiple operators, in accordance with an embodiment of the present invention. In an embodiment of the present invention, the SMS-relay platform 204 is configured to network with a plurality of SMSCs. Thus, the system 202 for the Ad-Insertion SMS Service can serve a network consisting of more than one SMSC. The system 202 can also serve more than one network with a single SMS-relay platform 204. The system 202 includes a GT mapping table, which helps in relaying the MO-SMS to proper SMSC. Corresponding to each SMSC there is an individual GT associated with the central SMS-relay platform 204. The SMS-relay platform 204 maps the SCCP CdPA and the TCAP/MAP SMSC parameter of the text message to the original SMSC address.

In another embodiment of the present invention, the SMS-relay platform 204 is associated with a pool of GTs for each charge zone of VMSC/SGSN addresses. The SMS-relay platform 204 selects a GT from the pool of the charge zone of the original VMSC/SGSN address to correspond to the VMSC/SGSN address. This ensures that the reception and possibly the final delivery result of the ad-inserted text message by the SMSC 110 is received by the SMS-relay platform 204 to confirm/retract the credit of the subscriber. It also ensures that a charging-based-on-location SMSC applies the right charge to the MO-SMS sent by the subscriber.

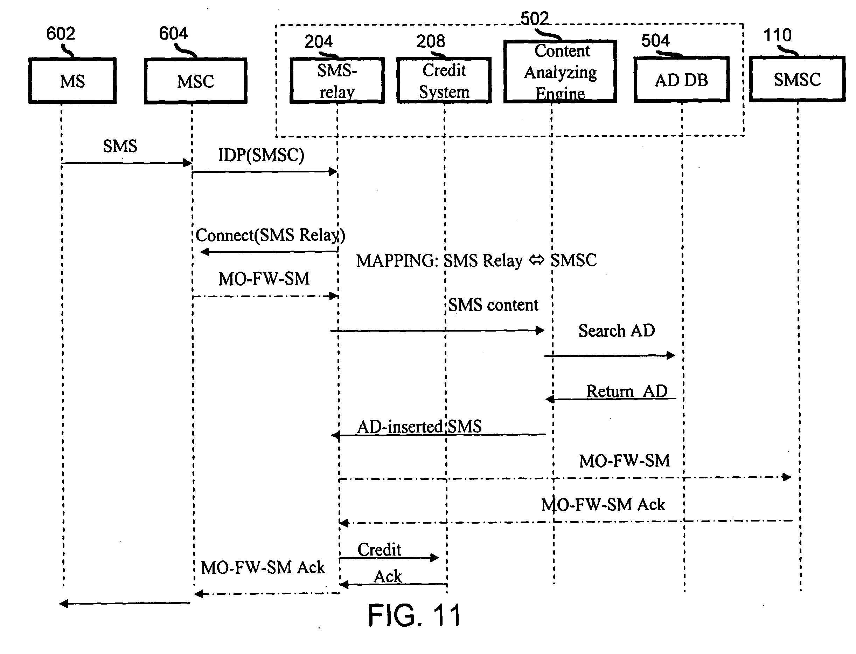

FIG. 11 illustrates a process flow of receiving the text message within CAMEL 3 framework with a new MO-SMS-CSI for the subscriber, in accordance with an embodiment of the present invention. The CAMEL approach can be applied for a HPMN that supports CAMEL 3 or above. In the CAMEL approach, the subscriber does not need to change SMSC address on the first communication device 102. However the subscriber is provisioned at HLR with a CAMEL 3 MO-SMS CAMEL Subscription Information (MO-SMS-CSI) which is downloaded to VLR at the registration of the VLR by the subscriber. The Service Control Point (SCP) of the trigger is the SMS-relay platform 204.

Each time the subscriber sends a text message, the control of the text message is sent to the SCP by a Service Switch Point (SSP). For example, MSC, SGSN and the like. The SCP then can redirect the SSP to send the text message to pass through the SCP itself by changing the SMSC address to be a global title of the system 202 to correspond to the original SMSC address. The SMS-relay platform 204 then inserts an advertisement into the MO-FW-SM and sends AD-inserted SMS message to the SMSC 110. Further, the SMSC 110 acks the SMS-relay platform 204 for the MO-FW-SM and then the SMS-relay platform 204 provides a credit to the subscriber by interfacing with the credit module 208. Finally, the SMS-relay platform 204 acks the mobile device 602 for the MO-FW-SM.

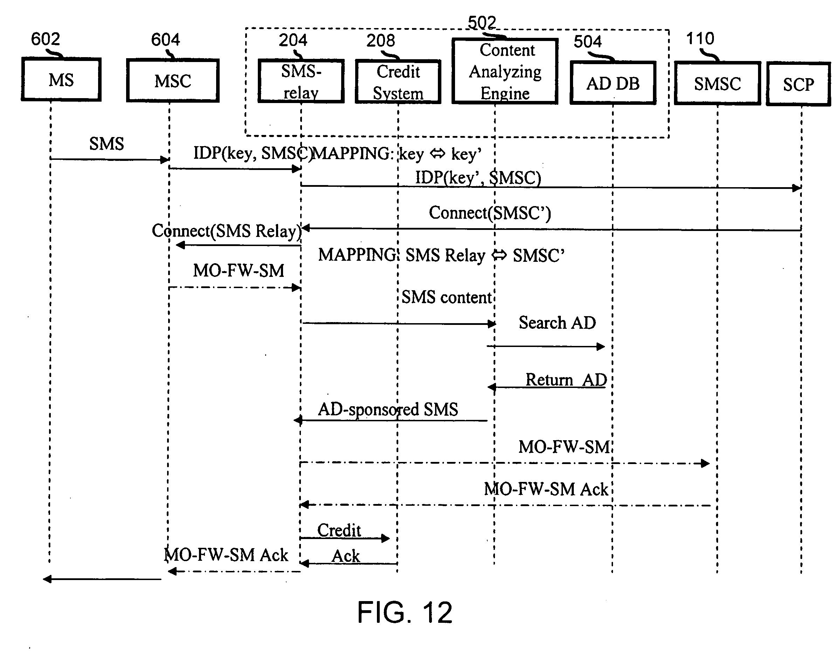

FIG. 12 illustrates a process flow of receiving the text message within CAMEL 3 framework with an existing MO-SMS-CSI for the subscriber, in accordance with another embodiment of the present invention. The subscriber already has a MO-SMS CSI in the HLR. Further, the service key of the profile in the HLR is changed to another service key corresponding to the system 202. Each time the subscriber sends a text message, the control of the text message can be passed by SSP to the original SCP via relay through the SMS-relay platform 204.

The SMS-relay platform 204 can examine the Service Key of the control message IntialDP-SMS from the SSP. If the Service key corresponds to the Ad-insertion SMS Service, then the SMS-relay platform 204 changes the service key back to the original service key via a mapping before directing the InitialDP-SMS to the original SCP. The original SCP sends the response instruction to the SSP via the SMS-relay platform 204 again. The SMS-relay platform 204 changes the SMSC to a global title of the SMS-relay platform 204 before sending a ConnectSMS (SMS-Relay) to the SSP. When the text message is goes through the SMS-relay platform 204, it inserts advertisement content into the text message first before directing the message to the SMSC 110.

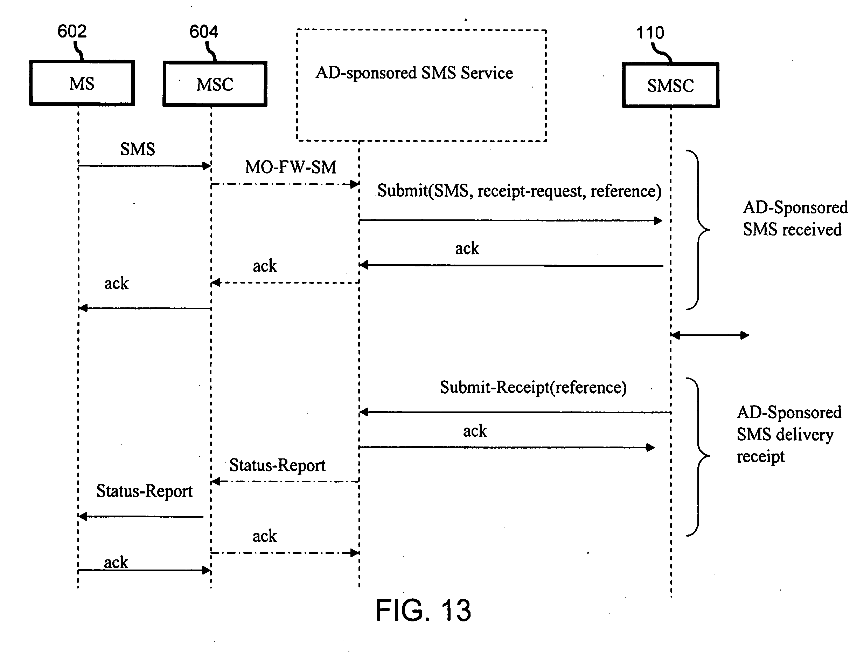

FIG. 13 illustrates a process flow of sending delivery status information to the subscriber, in accordance with an embodiment of the present invention. In an embodiment of the present invention, the SMS-relay platform 204 uses an IP protocol such as SMPP, CIMD, UCP etc to relay SMS to the SMSC 110. In this case, the SMS-relay platform 204 is like an application SME. The delivery information module 302 can set a delivery receipt request on in the IP request to the SMSC 110. Further, the SMSC 110 can send the delivery information receipt to the SMS-relay platform 204 via an IP interface like SMPP, CIMD, and UCP. Finally, the delivery information module 302 can send the delivery information receipt directly to the first subscriber via a Status Report message.

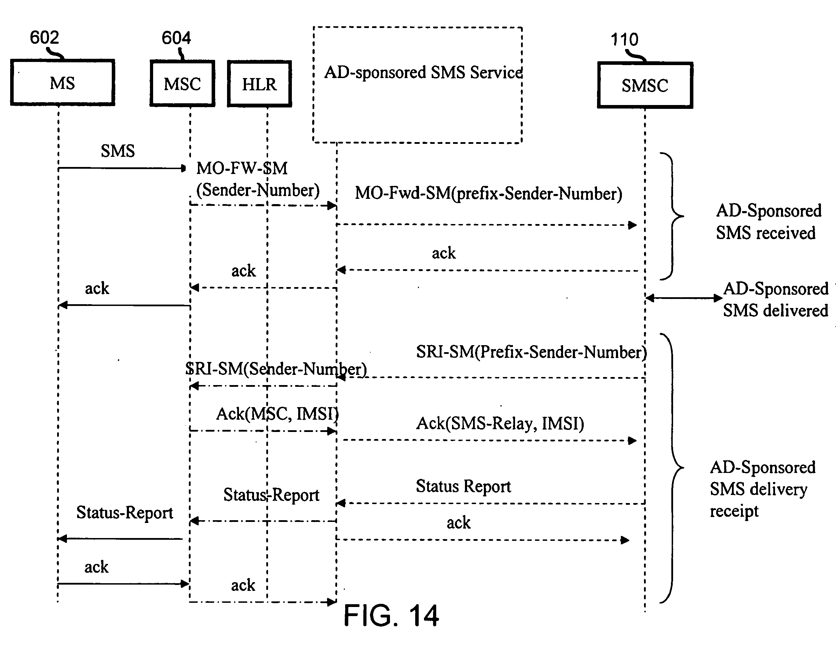

FIG. 14 illustrates a process flow of sending delivery status information to the subscriber, in accordance with another embodiment of the present invention. In another embodiment of the present invention, the SMS-relay platform 204 can add a prefix to the subscriber's number before directing the Ad-inserted text message to the SMSC 110 via the original SS7 ForwardSMS protocol received from the first subscriber's VMSC. The SMSC 110 then delivers a status report to the prefixed first subscriber's number, and fires SRI-SM on the prefixed number. The prefix destined query will be routed to the SMS-relay platform 204 which stripes of the prefix and relays the query to the original HLR of the first subscriber's number to get the original IMSI and original VMSC. The SMS-relay platform 204 then returns its own GT as the VMSC address and the original IMSI to the SMSC 110. The SMSC 110 then can deliver the status report to the SMS-relay platform 204 which then relays the report to the original VMSC.

So the method or system of the present invention for inserting advertisement content into a text message can serve the purpose of inserting advertisements into text messages without modifying the existing network infrastructure. Also, the method and system for inserting advertisement content into a text message can be used to provide a cost effecting solution for sending text messages to people.

The system for inserting advertisement content into a text message can support various alternate business models. Examples of the alternate business models include, but are not limited to:
(i) a sender will not have his message inserted with an advertisement and only the delivery receipt report will be inserted with an advertisement to send to the sender. Since all delivery receipts will come back to the ad-insertion SMS System anyway, irrespective of a subscriber requesting or not, the SMS-relay platform can insert ad into the delivery report to the sender;
(ii) a sender will not have his message inserted with an advertisement unless a recipient is the subscriber of the ad-insertion SMS service. In this case, the recipient will be credited for each message received. Since normally there is no mobile terminated roaming charge, the credit will all be same in all locations. Hence, the subscriber will not be able to send text message unless he receives some ad-inserted text message;
(iii) a sender will not have his text message inserted with an advertisement at all when the sender is the subscriber of the ad-insertion SMS service. In this case, the sender will still be credited for each message sent as before. However, the SMS-relay platform will send separately a full advertisement text message to the sender. Only if the full advertisement text message is failed to be delivered to the sender, the credit module will debit the credit. The SMS-relay platform can also interface a SMSC of the sender to send the full advertisement text message and request a delivery information receipt from the SMSC on the text message;
(iv) The SMS-relay platform will only insert an advertisement to a sender's text message to a recipient when the recipient is a subscriber of the ad-insertion SMS service. The SMS-relay platform will also send separately a full advertisement text message to the sender. Both the sender and the recipient get a credit (maybe different amount);
(v) A full advertisement text message is sent separately by the SMS-relay platform to a sender or a recipient, by other alternative channels. For example, email, WAP Push, instant messaging and the like; and
(vi) the ad-insertion SMS service is an operator-independent service provider. For each full advertisement text message sent by the ad-insertion SMS Service to the sender, the AD-Sponsored Service Provider pays a cost to the operator or share the ad-revenue with the operator (similar to a premium SMS).

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

The examples under the present invention, detailed in the illustrative examples contained here, are described using terms and constructs drawn largely from internet and GSM mobile telephony infrastructure. However, use of these examples should not be interpreted to limiting the invention to those media. The capabilities of the visited or non-accustomed network can be of use and provided through any type of internet and telecommunications medium, including without limitation: (i) any mobile telephony network including, without limitation, GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices; (iii) an entertainment console platform such as Sony Playstation, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet 8.

### APPENDIX

| Acronym | Description |
|---|---|
| 3G | Third generation of mobile |
| ACM | ISUP Address Completion Message |
| ANM | ISUP Answer Message |
| ANSI-41 | American National Standards Institute #41 |
| ATI | Any Time Interrogation |
| BCSM | Basic Call State Model |
| BSC | Base Station Controller |
| CAMEL | Customized Application for Mobile Enhanced Logic |
| CAP | CAMEL Application Part |
| CB | Call Barring |
| CC | Country Code |
| CDMA | Code Division Multiplexed Access |
| CdPA | Called Party Address |
| CgPA | Calling Party Address |
| CLI | Calling Line Identification |
| CSD | Circuit Switched Data |
| CSI | CAMEL Subscription Information |
| DPC | Destination Point Code |
| EPvB | CAP Event Report Basic call state model |
| FPMN | Friendly Public Mobile Network |
| FTN | Forward-To-Number |
| GLR | Gateway Location Register |
| GMSC | Gateway MSC |
| GMSC-F | GMSC in FPMN |
| GMSC-H | GMSC in HPMN |
| GPRS | General Packet Radio System |
| GSM | Global System for Mobile |
| GSM SSF | GSM Service Switching Function |
| gsmSCF | GSM Service Control Function |
| GT | Global Title |
| HLR | Home Location Register |
| HLR-F | FPMN HLR |
| HLR-H | HPMN HLR |
| HPMN | Home Public Mobile Network |
| GTT | Global Title Translation |
| IAM | Initial Address Message |
| IDP | Initial DP IN/CAP message |
| IMSI | International Mobile Subscriber Identity |
| IMSI-H | HPMN IMSI |
| IN | Intelligent Network |
| INAP | Intelligent Network Application Part |
| INE | Interrogating Network Entity |
| IP | Internet Protocol |
| ISC | International Service Carrier |
| ISD | MAP Insert Subscriber Data |
| ISG | International Signal Gateway |
| ISTP | International STP |
| ISTP-F | ISTP connected to FPMN STP |
| ISTP-H | ISTP connected to HPMN STP |
| ISUP | ISDN User Part |
| ITR | Inbound Traffic Redirection |
| IVR | Interactive Voice Response |
| LU | Location Update |
| LUP | MAP Location Update |
| MAP | Mobile Application Part |
| MCC | Mobile Country Code |
| MCC | Mobile Country Code |
| ME | Mobile Equipment |
| MGT | Mobile Global Title |
| MMS | Multimedia Message Service |
| MMSC | Multimedia Message Service Center |
| MMSC-F | FPMN MMSC |
| MMSC-H | HPMN MMSC |
| MNC | Mobile Network Code |
| MO | Mobile Originated |
| MSC | Mobile Switching Center |
| MSISDN | Mobile Station International Subscriber Directory Number |
| MSISDN-F | FPMN MSISDN |
| MSISDN-H | HPMN MSISDN |
| MSRN | Mobile Station Roaming Number |
| MSRN-F | FPMN MSRN |
| MSRN-H | HPMN MSRN |
| MT | Mobile Terminated |
| MTP | Message Transfer Part |
| NDC | National Dialing Code |
| NP | Numbering Plan |
| NPI | Numbering Plan Indicator |
| O-CSI | Originating CAMEL Subscription Information |
| ODB | Operator Determined Barring |
| OTA | Over The Air |
| PRN | MAP Provide Roaming Number . |
| PSI | MAP Provide Subscriber Information |
| RI | Routing Indicator |
| RNA | Roaming Not Allowed |
| RR | Roaming Restricted due to unsupported feature |
| RRB | CAP Request Report Basic call state model |
| SCCP | Signal Connection Control part |
| SCP | Service Control Point |
| SCP-H | HPMN SCP |
| SG | Signaling Gateway |
| SGSN | Serving GPRS Support Node |
| SGSN-F | FPMN SGSN |
| SIM | Subscriber Identity Module |
| SME | Short Message Entity |
| SM-RP-UI | Short Message Relay Protocol User Information |
| SMS | Short Message Service |
| SMSC | Short Message Service Center |
| SMSC-F | FPMN SMSC |
| SMSC-H | HPMN SMSC |
| SPC | Signal Point Code |
| SRI | MAP Send Routing Information |
| SRI-SM | MAP Send Routing Information For Short Message |
| ss | Supplementary Services |
| SS7 | Signaling System #7 |
| SSN | Sub System Number |
| SSP | Service Switch Point |
| STK | SIM Tool Kit Application |
| STP | Signal Transfer Point |
| STP-F | FPMN STP |
| STP-H | HPMN STP |
| TCAP | Transaction Capabilities Application Part |
| T-CSI | Terminating CAMEL Service Information |
| TP | SMS Transport Protocol |
| TR | Traffic Redirection |
| TT | Translation Type |
| UD | User Data |
| UDH | User Data Header |
| UDHI | User Data Header Indicator |
| USSD | Unstructured Supplementary Service Data |
| VAS | Value Added Service |
| VLR | Visited Location Register |
| VLR-F | FPMN VLR |
| VLR-H | HPMN VLR |
| VLR-V | VPMN VLR |
| VMSC | Visited Mobile Switching Center |
| VMSC-F | FPMN VMSC |
| VMSC-H | HPMN VMSC |
| VMSC-V | VPMN VMSC |
| VPMN | Visited Public Mobile Network |
| WAP | Wireless Access Protocol |

### Technical References

GSM 902 on MAP specification
Digital cellular telecommunications system (Phase 2+);
Mobile Application Part (MAP) Specification
3GPP TS 09.02 version 7.9.0 Release 1998
GSM 378 CAMEL Architecture, Release 1998
GSM 978 CAMEL Application Protocol, Release 1998
GSM 340 on SMS
Digital cellular telecommunications system (Phase 2+);
Technical realization of the Short Message Service (SMS);
GSM 03.40 version 7.4.0 Release 1998
Q1214-Q1218 on Intelligent Networks
Q701-704 on SS7MTP
Q711-Q714onSS7SCCP

## Claims

1. A method for inserting advertisement content into a text message, the text message being sent by a subscriber from a first communication device (102) via a Short Message Service Center SMSC (110) to a recipient, the text message having an original SMSC address, the method comprising:
inserting at least one advertisement selected from one or more advertisements into the text message (306); and
providing a credit to the subscriber for the text message 310),
the method being **characterised in that** it further comprises:
before inserting at least one advertisement, changing the original SMSC address of the text message (302); receiving the text message at the changed SMSC address (304); and
after inserting at least one advertisement, directing the text message with the inserted at least one advertisement to the SMSC (308).

2. The method recited in claim 1, wherein changing the original SMSC address further comprises:
mapping a Global Title GT to the original SMSC address.

3. The method recited in claim 2, wherein the GT is selected from one or more GTs, each GT of the one or more GTs being associated with a different Visited Mobile Switching Center/Serving General Packet Radio Service GPRS Support Node VMSC/SGSN charge zone address.

4. The method recited in claim 1, the text message having a Data Coding Scheme DCS, wherein inserting the at least one advertisement further comprises:
converting the DCS of the text message and the at least one advertisement to a same DCS.

5. The method recited in claim 1, wherein directing the text message with the inserted at least one advertisement to the SMSC further comprises:
mapping the original SMSC address to the changed SMSC address.

6. The method recited in claim 1, further comprising:
receiving delivery status information of the text message from the SMSC (406);
sending a status report to the subscriber (416), the status report comprising the delivery status information of the text message; and
inserting advertisement content into the status report.

7. The method recited in claim 1, further comprising:
blacklisting the subscriber from sending text messages when a failure rate of delivery of text messages exceeds a pre-specified threshold (412, 414).

8. The method recited in claim 1, further comprising:
disabling the inserting;
wherein disabling the inserting further comprises:
receiving the text message with a pre-specified prefix added to the recipient's number.

9. The method recited in claim 1, further comprising:
dividing the text message into at least two text messages, where the at least one advertisement is inserted in at least one of the at least two text messages.

10. The method recited in claim 1, further comprising:
delivering a reply message from the recipient to the subscriber; and
inserting another advertisement selected from the one or more advertisements into the reply message.

11. A system for inserting advertisement content into a text message, the text message being sent by a subscriber from a first communication device via a Short Message Service Center SMSC to a recipient, the text message having an original SMSC address, the system comprising:
an advertisement module (206) adapted to insert at least one advertisement selected from one or more advertisements into the text message; and
a credit module (208) adapted to provide a credit to the subscriber for the text message,
the system being **characterised in that** it further comprises:
an address change module adapted to change the original SMSC address of the text message to a changed address of the text message; and
a SMS-relay platform (204) adapted to receive the text message and direct the text message to the SMSC (110); and
wherein the advertisement module is adapted to insert the at least one advertisement selected from one or more advertisements into the text message received at the SMS-relay platform.

12. The system recited in claim 11, wherein the address change module is located at a Service Switch Point or at the first communication device (102).

13. The system recited in claim 11, wherein the address change module is adapted to change the original SMSC address of the text message by a means selected from a group consisting of a manual means by the subscriber, and an automatic means via an Over The Air process.

14. The system recited in claim 11, the advertisement module further comprising:
a permission module adapted to receive permission by the subscriber to inspect the text message; and
a compliance module adapted to refuse insertion of advertisements selected from the one or more advertisements that do not comply with the subscriber's permission.

15. A computer program product comprising a computer usable medium including a computer usable program code stored thereon for inserting advertisement content into a text message, the text message being sent by a subscriber from a first communication device via a Short Message Service Center SMSC to a recipient, the text message having an original SMSC address, the computer program product comprising:
code means, which when executed in an address change module, performs the step of changing the original SMSC address of the text message;
code means, which when executed in a SMS-relay platform, performs the step of receiving the text message at the changed SMSC address;
code means, which when executed in an advertisement module, performs the step of inserting at least one advertisement selected from one or more advertisements into the text message;
code means, which when executed in the SMS-relay platform, performs the step of directing the text message with the inserted at least one advertisement to the SMSC; and
code means, which when executed in a credit module, performs the step of providing a credit to the subscriber for the text message.

## Patentansprüche

1. Verfahren zum Einfügen von Werbeinhalt in eine Textnachricht, wobei die Textnachricht durch einen Teilnehmer von einem ersten Kommunikationsgerät (102) über ein Short Message Service Center SMSC (110) zu einem Empfänger gesendet wird, wobei die Textnachricht eine Original-SMSC-Adresse aufweist, wobei das Verfahren die folgenden Schritte umfasst:
Einfügen mindestens einer Werbung, die aus einer oder mehreren Werbungen ausgewählt wird, in die Textnachricht (306); und
Bereitstellen einer Gutschrift für den Teilnehmer für die Textnachricht(310);
wobei das Verfahren **dadurch gekennzeichnet ist, dass** es ferner die folgenden Schritte umfasst:
vor dem Einfügen mindestens einer Werbung, Ändern der Original-SMSC-Adresse der Textnachricht (302); Empfangen der Textnachricht an der geänderten SMSC-Adresse (304); und
nach dem Einfügen mindestens einer Werbung, Leiten der Textnachricht mit der eingefügten mindestens einen Werbung zu dem SMSC (308).

2. Verfahren nach Anspruch 1, wobei das Ändern der Original-SMSC-Adresse ferner Folgendes umfasst:
Abbilden eines Global Title GT auf die Original-SMSC-Adresse.

3. Verfahren nach Anspruch 2, wobei der GT aus einem oder mehreren GT ausgewählt wird, wobei jeder GT des einen oder der mehreren GT mit einer anderen Gebührenzonenadresse des Visited Mobile Switching Center/Serving General Packet Radio Service GPRS Support Node VMSC/SGSN assoziiert ist.

4. Verfahren nach Anspruch 1, wobei die Textnachricht ein Data Coding Scheme DCS aufweist, wobei das Einfügen der mindestens einen Werbung ferner Folgendes umfasst:
Umsetzen des DCS der Textnachricht und der mindestens einen Werbung in ein selbes DCS.

5. Verfahren nach Anspruch 1, wobei das Leiten der Textnachricht mit der eingefügten mindestens einen Werbung zu dem SMSC ferner Folgendes umfasst:
Abbilden der Original-SMSC-Adresse auf die geänderte SMSC-Adresse.

6. Verfahren nach Anspruch 1, ferner mit den folgenden Schritten:
Empfangen von Ablieferungs-Statusinformationen der Textnachricht aus dem SMSC (406);
Senden einer Statusmeldung zu dem Teilnehmer (416), wobei die Statusmeldung die Ablieferungs-Statusinformationen der Textnachricht umfasst; und
Einfügen von Werbeinhalt in die Statusmeldung.

7. Verfahren nach Anspruch 1, ferner mit dem folgenden Schritt:
Setzen des Teilnehmers auf eine schwarze Liste für das Senden von Textnachrichten, wenn eine Misserfolgsrate der Ablieferung von Textnachrichten eine vorspezifizierte Schwelle (412, 414) überschreitet.

8. Verfahren nach Anspruch 1, ferner mit den folgenden Schritten:
Sperren der Einfügung;
wobei das Sperren der Einfügung ferner Folgendes umfasst:
Empfangen der Textnachricht mit einem zu der Nummer des Empfängers hinzugefügten vorspezifizierten Präfix.

9. Verfahren nach Anspruch 1, ferner mit dem folgenden Schritt:
Aufteilen der Textnachricht in mindestens zwei Textnachrichten, wobei die mindestens eine Werbung in mindestens eine der mindestens zwei Textnachrichten eingefügt wird.

10. Verfahren nach Anspruch 1, ferner mit den folgenden Schritten:
Abliefern einer Antwortnachricht von dem Empfänger an den Teilnehmer; und
Einfügen einer weiteren aus der einen oder den mehreren Werbungen ausgewählten Werbung in die Antwortnachricht.

11. System zum Einfügen von Werbeinhalt in eine Textnachricht, wobei die Textnachricht durch einen Teilnehmer von einem ersten Kommunikationsgerät über ein Short Message Service Center SMSC zu einem Empfänger gesendet wird, wobei die Textnachricht eine Original-SMSC-Adresse aufweist, wobei das System Folgendes umfasst:
ein Werbemodul (206), das dafür ausgelegt ist, mindestens eine aus einer oder mehreren Werbungen ausgewählte Werbung in die Textnachricht einzufügen; und
ein Gutschreibemodul (208), das dafür ausgelegt ist, eine Gutschrift für den Teilnehmer für die Textnachricht bereitzustellen,
wobei das System **dadurch gekennzeichnet ist, dass** es ferner Folgendes umfasst:
ein Adressenänderungsmodul, das dafür ausgelegt ist, die Original-SMSC-Adresse der Textnachricht in eine geänderte Adresse der Textnachricht umzuändern; und
eine SMS-Relaisplattform (204), die dafür ausgelegt ist, die Textnachricht zu empfangen und die Textnachricht zu dem SMSC (110) zu leiten; und
wobei das Werbemodul dafür ausgelegt ist, die mindestens eine aus einer oder mehreren Werbungen ausgewählte Werbung in die an der SMS-Relaisplattform empfangene Textnachricht einzufügen.

12. System nach Anspruch 11, wobei sich das Adressenänderungsmodul in einem Service Switch Point oder in dem ersten Kommunikationsgerät (102) befindet.

13. System nach Anspruch 11, wobei das Adressenänderungsmodul dafür ausgelegt ist, die Original-SMSC-Adresse der Textnachricht durch ein Mittel zu ändern, das aus der folgenden Gruppe ausgewählt wird: ein manuelles Mittel durch den Teilnehmer und ein automatisches Mittel über einen per-Funk-Prozess.

14. System nach Anspruch 11, wobei das Werbemodul ferner Folgendes umfasst:
ein Zulassungsmodul, das dafür ausgelegt ist, von dem Teilnehmer eine Zulassung zu erhalten, die Textnachricht zu untersuchen; und
ein Einhaltungsmodul, das dafür ausgelegt ist, die Einfügung von aus der einen oder den mehreren Werbungen ausgewählten Werbung, die nicht die Zulassung des Teilnehmers einhält, zu verweigern.

15. Computerprogrammprodukt, das ein computerbenutzbares Medium umfasst, auf dem ein computerbenutzbarer Programmcode zum Einfügen von Werbeinhalt in eine Textnachricht gespeichert ist, wobei die Textnachricht durch einen Teilnehmer von einem ersten Kommunikationsgerät über ein Short Message Service Center SMSC zu einem Empfänger gesendet wird, wobei die Textnachricht eine Original-SMSC-Adresse aufweist, wobei das Computerprogrammprodukt Folgendes umfasst:
ein Codemittel, das, wenn es in einem Adressenänderungsmodul ausgeführt wird, den Schritt des Änderns der Original-SMSC-Adresse der Textnachricht ausführt;
ein Codemittel, das, wenn es in einer SMS-Relaisplattform ausgeführt wird, den Schritt des Empfangens der Textnachricht an der geänderten SMSC-Adresse ausführt;
ein Codemittel, das, wenn es in einem Werbemodul ausgeführt wird, den Schritt des Einfügens mindestens einer aus einer oder mehreren Werbungen ausgewählten Werbung in die Textnachricht ausführt;
ein Codemittel, das, wenn es in der SMS-Relaisplattform ausgeführt wird, den Schritt des Leitens der Textnachricht mit der eingefügten mindestens einen Werbung zu dem SMSC ausführt; und
ein Codemittel, das, wenn es in einem Gutschreibemodul ausgeführt wird, den Schritt des Bereitstellens einer Gutschrift für den Teilnehmer für die Textnachricht ausführt.

## Revendications

1. Procédé d'insertion d'un contenu publicitaire dans un message de texte, le message de texte étant envoyé à un destinataire par un abonné à partir d'un premier dispositif de communication (102) par l'intermédiaire d'un centre de service de mini-messages SMSC (110), le message de texte comportant une adresse originelle de centre SMSC, le procédé comprenant :
l'insertion dans le message de texte (306) d'au moins une publicité sélectionnée à partir d'une ou de plusieurs publicités, et
la fourniture d'un crédit à l'abonné pour le message de texte (310),
le procédé étant **caractérisé en ce qu'**il comprend en outre :
avant l'insertion d'au moins une publicité, la modification de l'adresse originelle du centre SMSC du message de texte (302), la réception du message de texte à l'adresse modifiée du centre SMSC (304), et
après l'insertion d'au moins une publicité, l'orientation vers le centre SMSC (308) du message de texte avec la ou les publicités insérées.

2. Procédé selon la revendication 1, dans lequel la modification de l'adresse originelle du centre SMSC comprend en outre :
le mappage d'un titre global GT sur l'adresse originelle du centre SMSC.

3. Procédé selon la revendication 2, dans lequel le titre global GT est sélectionné à partir d'un ou de plusieurs titres GT, chaque titre global GT, faisant partie des un ou plusieurs titres GT, étant associé à une adresse différente de zone de facturation du centre de commutation mobile visité ou du noeud de prise en charge de desserte de service général radio en paquets GPRS, ou VMSC / SGSN.

4. Procédé selon la revendication 1 dont le message de texte comporte un principe de codage de données DCS, dans lequel l'insertion de la ou des publicités comprend en outre :
la conversion du principe DCS du message de texte et de la ou des publicités en un même principe DCS.

5. Procédé selon la revendication 1, dans lequel l'orientation vers le centre SMSC du message de texte comportant la ou les publicités insérées comprend en outre :
le mappage de l'adresse originelle du centre SMSC sur l'adresse modifiée du centre SMSC.

6. Procédé selon la revendication 1, comprenant en outre :
la réception d'informations d'état de délivrance du message de texte en provenance du centre SMSC (406), l'envoi d'un rapport d'état à l'abonné (416), le rapport d'état comprenant les informations d'état de délivrance du message de texte, et
l'insertion d'un contenu publicitaire dans le rapport d'état.

7. Procédé selon la revendication 1, comprenant en outre :
la mise en liste noire de l'abonné par rapport à l'envoi de messages de texte lorsque le taux de défaillances de délivrance de messages de texte dépasse un seuil spécifié à l'avance (412, 414).

8. Procédé selon la revendication 1, comprenant en outre :
la désactivation de l'insertion,
dans lequel la désactivation de l'insertion comprend en outre :
la réception du message de texte avec un préfixe spécifié à l'avance ajouté au numéro du destinataire.

9. Procédé selon la revendication 1, comprenant en outre :
la division du message de texte en au moins deux messages de texte lorsque la ou les publicités sont insérées dans au moins l'un des au moins deux messages de texte.

10. Procédé selon la revendication 1, comprenant en outre :
la délivrance d'un message de réponse depuis le destinataire à l'abonné, et
l'insertion d'une autre publicité sélectionnée à partir des une ou plusieurs publicités dans le message de réponse.

11. Système permettant d'insérer un contenu publicitaire dans un message de texte, le message de texte étant envoyé à un destinataire par un abonné à partir d'un premier dispositif de communication par l'intermédiaire d'un centre de service de mini-messages SMSC, le message de texte comportant une adresse originelle de centre SMSC, le système comprenant :
un module de publicité (206) conçu pour insérer dans le message de texte au moins une publicité sélectionnée à partir d'une ou de plusieurs publicités, et
un module de crédit (208) conçu pour fournir un crédit à l'abonné pour le message de texte,
le système étant **caractérisé en ce qu'**il comprend en outre :
un module de modification d'adresse conçu pour modifier l'adresse originelle du centre SMSC du message de texte en une adresse modifiée du message de texte, et
une plate-forme de relayage de mini-messages SMS (204) conçue pour recevoir le message de texte et pour orienter le message de texte vers le centre SMSC (110), et
dans lequel le module de publicité est conçu pour insérer la ou les publicités sélectionnées à partir d'une ou de plusieurs publicités dans le message de texte reçu au niveau de la plate-forme de relayage de mini-messages SMS.

12. Système selon la revendication 11, dans lequel le module de modification d'adresse est situé au niveau d'un point de commutation de service ou au niveau du premier dispositif de communication (102).

13. Système selon la revendication 11, dans lequel le module de modification d'adresse est conçu pour modifier l'adresse originelle du centre SMSC du message de texte grâce à un moyen sélectionné à partir d'un groupe constitué d'un moyen manuel par l'abonné et d'un moyen automatique par l'intermédiaire d'un traitement en liaison radio.

14. Système selon la revendication 11, le module de publicité comprenant en outre :
un module d'autorisation conçu pour recevoir une autorisation donnée par l'abonné pour examiner le message de texte, et
un module de conformité conçu pour refuser l'insertion de publicités sélectionnées à partir des une ou plusieurs publicités qui ne sont pas conformes à l'autorisation de l'abonné.

15. Programme informatique comprenant un support utilisable par un ordinateur incluant un code informatique utilisable par un ordinateur et stocké dans celui-ci en vue d'insérer un contenu publicitaire dans un message de texte, le message de texte étant envoyé à un destinataire par un abonné à partir d'un premier dispositif de communication par l'intermédiaire d'un centre de service de mini-messages SMSC, le message de texte comportant une adresse originelle de centre SMSC, le programme informatique comprenant :
un moyen de codage qui, lorsqu'il est exécuté dans un module de modification d'adresse, effectue l'étape consistant à modifier l'adresse originelle du centre SMSC du message de texte,
un moyen de codage qui, lorsqu'il est exécuté dans une plate-forme de relayage de mini-messages SMS, effectue l'étape consistant à recevoir le message de texte à l'adresse modifiée du centre SMSC,
un moyen de codage qui, lorsqu'il est exécuté dans un module de publicité, effectue l'étape consistant à insérer dans le message de texte au moins une publicité sélectionnée à partir d'une ou de plusieurs publicités,
un moyen de codage qui, lorsqu'il est exécuté dans la plate-forme de relayage de mini-messages SMS, effectue l'étape consistant à orienter le message de texte comportant la ou les publicités insérées vers le centre SMSC, et
un moyen de codage qui, lorsqu'il est exécuté dans un module de crédit, effectue l'étape consistant à fournir un crédit à l'abonné pour le message de texte.
